**Europäisches Patentamt**

(19) **European Patent Office**

**Office européen des brevets**

(11) Numéro de publication: **0 023 181 B1**

(12) **FASCICULE DE BREVET EUROPEEN**

(45) Date de publication du fascicule du brevet:
**01.12.82**

(21) Numéro de dépôt: **80401079.1**

(22) Date de dépôt: **18.07.80**

(51) Int. Cl.³: **H 04 M 15/30**

(54) Appareil enregistreur automatique de coût d'une communication téléphonique et central téléphonique associé.

(30) Priorité: **24.07.79 FR 7919101**

(43) Date de publication de la demande:
**28.01.81 Bulletin 81/4**

(45) Mention de la délivrance du brevet:
**01.12.82 Bulletin 82/48**

(84) Etats contractants désignés:
**BE CH DE GB IT LI NL SE**

(56) Documents cités:
**DE-A-2 518 063**
**DE-A-2 558 680**
**DE-A-2 709 461**
**GB-A-2 028 058**
**US-A-4 146 746**
**FUNKSCHAU, 1975, vol. 47, no. 8, Munich DE LAUNER:**
«**Elektronischer Gebühreneinheiten-Zähler**», pages 125–127

(73) Titulaire: **Serres, Bernard, 51, avenue de la Paix, F-94260 Fresnes (FR)**
Titulaire: **Girard, Jean, 2, Rue P.J. Redouté, 92360 Meudon-La-Foret (FR)**
Titulaire: **Blanc, Michel, 36, rue Washington, F-75008 Paris (FR)**

(72) Inventeur: **Serres, Bernard, 51, avenue de la Paix, F-94260 Fresnes (FR)**
Inventeur: **Girard, Jean, 2, Rue P.J. Redouté, 92360 Meudon-La-Foret (FR)**
Inventeur: **Blanc, Michel, 36, rue Washington, F-75008 Paris (FR)**

(74) Mandataire: **Martinet, René et al, Cabinet Martinet 62, rue des Mathurins, F-75008 Paris (FR)**

Appareil enregistreur automatique de coût d'une communication téléphonique et central téléphonique associé

La présente invention concerne un appareil enregistreur du coût d'une communication téléphonique comprenant des moyens de couplage à la ligne téléphonique d'un poste d'abonné desservi par un central de rattachement, un compteur d'impulsions de taxe, des premiers moyens pour mémoriser la taxe de base de ladite communication, des moyens pour établir le coûte de la communication, des moyens pour visualiser au moins la taxe de base de la communication avant l'établissement de la phase de conversation et le coût de la communication, une horloge fournissant des impulsions d'horloge, des moyens pour détecter le raccrochage de l'abonné et des moyens de temporisation commandés par lesdits moyens de détection de raccrochage pour commander lesdits moyens de visualisation après le raccrochage. Elle a trait également au central téléphonique associé desservant cet appareil.

On connaît de nombreuses variantes d'un tel appareil enregistreur, appelées couramment compteurs de taxes téléphoniques d'abonné. Les moyens de visualisation de certaines variantes indiquent à l'abonné, outre certaines données afférentes à la communication telles que le numéro d'appel de l'abonné demandé, l'heure d'établissement de la communication et la durée de la communication, également des données de taxation. Ces données de taxation sont principalement le nombre d'impulsions de taxe détectées par l'appareil enregistreur (demande de brevet français 2.340.001, demande de brevet allemand DE-OS 25 58 680), le coût de la communication (demande de brevet français 2.427.016), brevet américain 4.146.746, demandes de brevet allemand DE-OS 25 05 728, DE-AS 22 48 468, DE-OS 27 09 461 et DE-OS 23 36 102) et, éventuellement, le nombre d'impulsions de taxe cumulé (demande de brevet allemand DE-OS 25 18 063) ainsi que le coût global cumulé qui sont relatifs à des communications établies pendant une période prédéterminée (demande de brevet français 2.427.016).

Tous les appareils enregistreurs qui indiquent le coût d'une communication comprennent des premiers moyens pour mémoriser la taxe de base ou taxe unitaire de ladite communication afin que les moyens d'établissement du coût de la communication effectuent le calcul de l'opération: nombre d'impulsions de taxe (CT) × taxe de base (TB)=coût de la communication (CC).

Les moyens d'établissement de coût peuvent comprendre une boucle d'addition qui comporte un sommateur qui additionne le coût actuel de la communication en cours mémorisé dans une mémoire vive à la taxe de base, en réponse à la détection d'une impulsion de taxe (demandes de brevet allemand DE-OS 25 18 063 et DE-OS 27 09 461). Plus simplement, les moyens d'établissement de coût peuvent comprendre un décompteur qui décompte un nombre d'impulsions de ladite horloge égal au nombre d'unités monétaires représentant la taxe de base, en réponse à la détection d'une impulsion de taxe, et qui transmet à un compteur de coût actuel ledit nombre d'impulsions d'horloge. Ainsi, le compteur de coût actuel comptabilise le coût croissant de la communication en cours qui peut être affiché, soit pendant, soit à la fin de la communication après raccrochage de l'abonné demandeur, sous la commande de moyens de temporisation (demande de brevet français 2.427.016, brevet américain 4.176.746, demande de brevet allemand DE-OS 25 05 728).

Afin de calculer convenablement le coût de la communication, de tels appareils enregistreurs comprennent, en tant que premiers moyens de mémorisation, un registre, tels que des roues codeuses ou un jeu d'interrupteurs, dont le contenu est sélectionné manuellement par l'abonné en vue d'enregistrer la taxe de base de la communication. En effet, cette taxe de base dépend du type de la communication demandée, c'est-à-dire de la zone de rattachement de l'abonné demandé. Par suite, avant que l'abonné décroche le combiné de son poste, il doit rechercher dans le tableau de taxation donné par l'administration le coût de la taxe de base de la communication à établir, en fonction du préfixe du numéro d'appel demandé, puis afficher dans lesdits premiers moyens de mémorisation cette taxe de base. Ces opérations sont fastidieuses et peuvent être la source d'erreurs quant au coût de la communication calculé par la suite.

Par ailleurs, tous les appareils enregistreurs cités précédemment nécessitent que soient transmises des impulsions de taxe depuis le central de rattachement jusqu'au poste téléphonique d'abonné à travers la ligne d'abonné. Cette transmission d'impulsions de taxe est onéreuse puisqu'au niveau du central, il faut autant de générateurs d'impulsions de taxe que de joncteurs de ligne d'abonné. En outre, lorsque ces impulsions de taxe sont modulées à 50 Hz, des parasites sont engendrés sur la ligne téléphonique pendant la conversation si l'équilibrage par rapport à la terre n'est pas parfait. Egalement, lorsque les impulsions de taxe sont modulées à 12 kHz ou à 16 kHz, c'est-à-dire hors bande des audiofréquences, les problèmes de transmission inhérents à de telles impulsions de taxe ne permettent pas la généralisation à tous les types de terminaux d'abonné.

Outre ces impulsions de taxe, le brevet américain 4.176.746 mentionne, de la colonne 3, lingne 64 à la colonne 4, ligne 5, que le prix de la taxe de base peut être transmis sur la ligne téléphonique et détectée par l'appareil enregistreur, en vue d'éviter une intervention locale de l'abonné. Cette taxe de base est transmise sous la forme d'une séquence d'impulsions modulant la fréquence de 12 kHz, égale à celles des impulsions de taxe, mais à une cadence différente. La transmission de telles séquences présente également les inconvénients ci-dessus.

Le but de la présente invention est de fournir un appareil enregistreur qui, conjointement à certaines modifications de son central de rattachement, permette le calcul automatique du coût d'une communication sans nécessiter la transmission d'impulsions de taxe sur la ligne téléphonique à partir du central vers le poste d'abonné. En d'autres termes, l'appareil enregistreur élabore lui-même les impulsions de taxe dès l'établissement d'une communication, contrairement à tous les appareils enregistreurs connus. Cette élaboration d'impulsions est automatique, sans interventions manuelles de l'abonné.

A cette fin, un appareil enregistreur conforme à l'invention, du type défini dans l'entrée en matière, est caractérisé en ce qu'il comprend des moyens reliés aux moyens de couplage pour détecter un message codé de données, telles que la période des impulsions de taxe afférente à ladite communication, qui est transmis par le central de rattachement audit poste après la numérotation du numéro d'appel demandé, des seconds moyens pour mémoriser la période des impulsions de taxe et des moyens connectés aux seconds moyens de mémorisation et à ladite horloge pour produire des impulsions de taxe à ladite période de taxe comptées par ledit compteur de taxe en réponse au message détecté.

Conformément à l'invention, les messages échangés entre le central de rattachement et l'appareil enregistreur sont élaborés à travers des modems. Le central de rattachement de l'abonné comprend des moyens interconnectés entre le joncteur de la ligne d'abonné et le taxeur dudit central pour coder et transmettre vers ledit appareil des messages codés de données sur ordre dudit taxeur.

Le message comprend essentiellement un mot indiquant le type de taxation de la communication, c'est-à-dire si celle-ci est taxée à la durée ou non, ainsi que la taxe de base et la période des impulsions de taxe, dite palier de taxe (PT). La taxe de base peut être affichée automatiquement au début de la communication et évite toute recherche fastidieuse de la part de l'abonné. Par ailleurs, le message précité et autres messages élaborés par le central ou l'appareil enregistreur sont transmis pendant la phase d'établissement de la communication ou en dehors de la phase de conversation. Aucune transmission de signalisation, telle que les impulsions de taxe selon la technique antérieure, ne «pollue» ainsi la ligne téléphonique pendant la conversation. Etant donné que le taxeur et le modulateur associé sont affectés à une pluralité de lignes téléphoniques d'abonné, par simple commutation automatique, le coût du bloc de supervision du central s'en trouve réduit.

L'horloge contenue dans l'appareil enregistreur est d'une stabilité élevée et sert de référence en vue de produire des impulsions de taxe. Pour ce faire, l'appareil enregistreur peut comprendre un diviseur de fréquence programmable recevant les impulsions d'horloge et des moyens reliés auxdits seconds moyens de mémorisation pour sélectionner des sorties du diviseur de fréquence programmable en fonction de la période de taxe mémorisée afin que ledit diviseur compte périodiquement un nombre d'impulsions d'horloge égal au rapport de la période de taxe et de la période des impulsions d'horloge et transmette au compteur de taxe des impulsions de taxe à ladite période de taxe.

L'invention sera mieux comprise à la lecture de la description qui suit de plusieurs exemples de réalisation et à l'examen des dessins annexés correspondants, dans lesquels:

— la Fig. 1 est un bloc-diagramme schématique montrant l'interconnexion de l'appareil enregistreur avec le poste d'abonné et la ligne téléphonique;

— la Fig. 2 est un bloc-diagramme du circuit de détection de signaux de supervision et des données de taxation de l'appareil;

— la Fig. 3 est un bloc-diagramme de l'unité de commande de l'appareil;

— la Fig. 4 est un bloc-diagramme du circuit de comptage et de visualisation de l'appareil;

— la Fig. 5 est un bloc-diagramme simplifié du central téléphonique de rattachement desservant l'appareil; et

— la Fig. 6 est un bloc-diagramme de moyens pour transmettre, vers le central, des données de taxation élaborées par l'appareil enregistreur.

En se référant aux figures, on décrit en premier lieu un appareil enregistreur conforme à l'invention accomplissant les fonctions principales, telles que l'élaboration et la visualisation du coût d'une communication.

L'appareil enregistreur comprend essentiellement un circuit de détection 1 pour détecter certains signaux de supervision émis lors de l'établissement d'une communication téléphonique et un message de données afférentes à la taxation de la communication, une unité de commande 2 élaborant suivant un programme pré-enregistré toutes les commandes en vue du calcul du coût de la communication, et un circuit de comptage et de visualisation 3 qui est commandé par l'unité de commande en vue de calculer et de visualiser le coût de la communication.

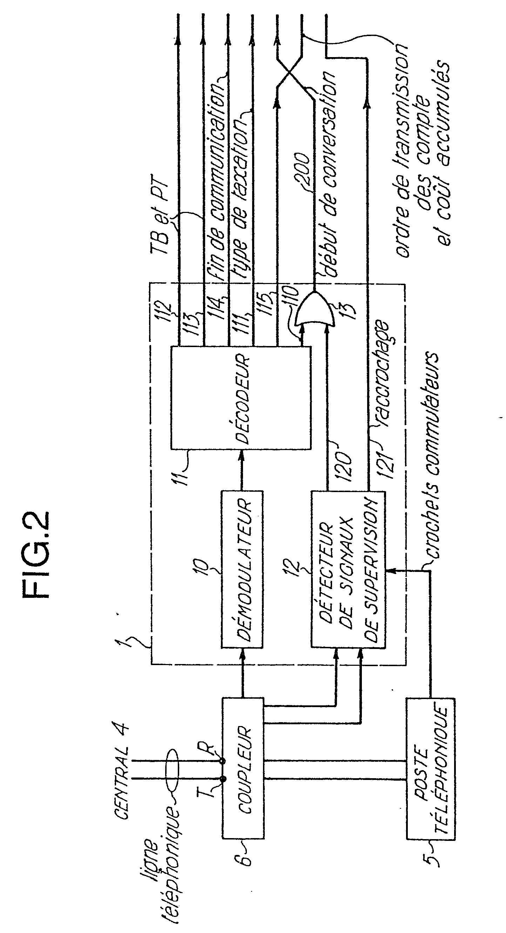

Tel qu'illustré à la Fig. 2, le circuit de détection 1 comprend un démodulateur 10 en série avec un décodeur 11, et un détecteur 12. Le détecteur 12 détecte des signaux de supervision tels que les inversions de polarité de la batterie du central téléphonique 4 auquel est rattaché le poste téléphonique d'abonné 5 à travers la ligne téléphonique TR.

Le démodulateur 10 et autres modulateurs et démodulateurs prévus pour la présente invention sont du type à modulation série bivalente obtenue par déplacement de fréquence. Ils sont conformes, par exemple, aux prescriptions de l'avis V 21 du Comité Consultatif International Télégraphique et Téléphonique (C.C.I.T.T.). Ils sont caractérisés principalement par une faible rapidité de modulation de l'ordre de 200 bauds et par deux voies dites aller et de retour, respectivement à fréquences nominales moyennes respectivement égales à 1080 Hz et 1750 Hz avec une excursion en fréquence de ± 100 Hz. Sur chaque voie la fréquence caractéristique la plus élevée correspond à un bit «0».

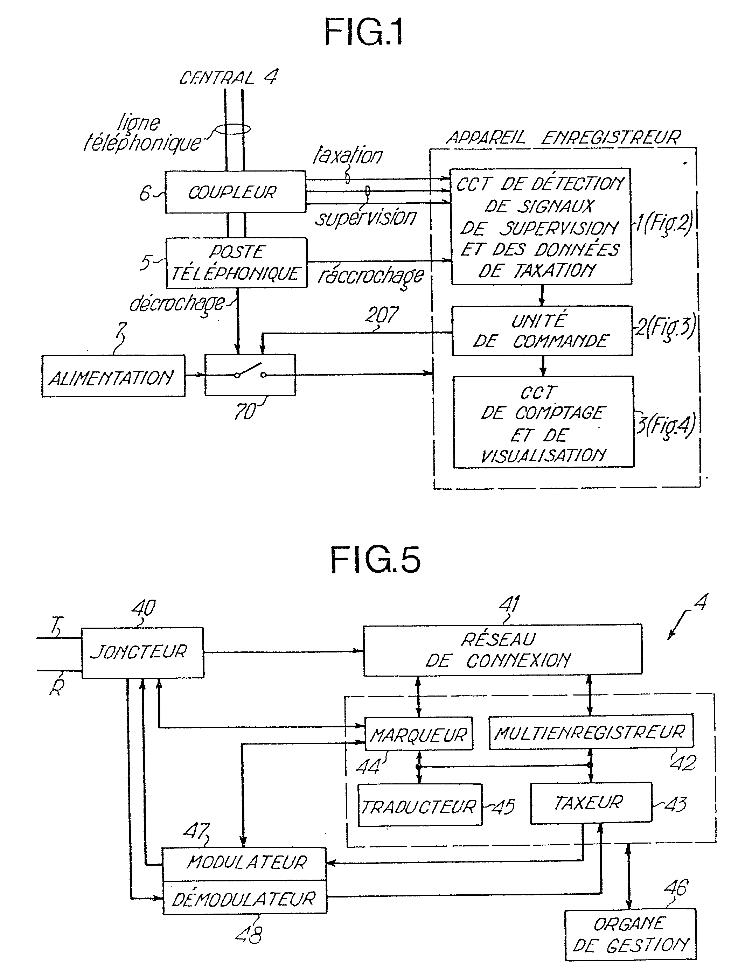

Par exemple, lorsque le modulateur affecté à la ligne d'abonné est adressé par le multi-enregistreur du central après la réception du signal d'accusé de réception de l'abonné demandé – comme on le verra dans la suite, en référence à la Fig. 5 – le démodulateur 10 reçoit un message de taxation. Dans ce message, les bits à l'état «1» correspondent à la fréquence caractéristique la plus faible de la voie retour égale à 1650 Hz et les bits à l'état «0» à la fréquence caractéristique la plus élevée égale à 1850 Hz. Le démodulateur 10 est du type connu F S K, c'est-à-dire fonctionne par glissement en fréquence au moyen d'une boucle à verrouillage de phase à travers un oscillateur commandé par tension. Le démodulateur 10 est connecté de manière connue à la ligne téléphonique d'abonné TR au niveau du poste 5, par l'intermédiaire d'un coupleur. Ce coupleur peut être du type comprenant un transformateur différentiel, des photocoupleurs, des ponts de diodes ou des relais et contacts, ou bien encore, du type coupleur inductif dont l'enroulement coopère avec la bobine du circuit audio du poste téléphonique. Un tel coupleur est représenté schématiquement en 6 sur les Figs. 1 et 2, et on se reportera aux demandes de brevet et brevets déjà cités dans l'entrée en matière en ce qui concerne les caractéristiques de ces différents coupleurs.

Le décodeur 11 reçoit à son entrée le message de taxation convenablement démodulé et transmis sous forme binaire par la sortie due démodulateur 10. Ce message de taxation qui est transmis après la numérotation du numéro de l'abonné demandé, comporte:

– comme pour toutes transmissions classiques par modem, des bits de signalisation tels que des bits de début et de fin de message et des bits de parité et,

á la suite des bits de début de message et de parité:

– éventuellement, un premier mot codé indiquant que la phase de numérotation est terminée et que, après le décrochage par l'abonné demandé, le central de rattachement a reçu le signal d'accusé de réception initialisant l'établissement de la communication;

– puis, un second mot comprenant un bit à l'état «0» lorsque la communication n'est pas taxée à la durée et que l'abonné demandé appartient à la zone locale de rattachement du central, ou à l'état «1» lorsque la communication est interurbaine, nationale ou internationale correspondant à une taxation à la durée;

– un troisième mot codé binaire indiquant le coût de la taxe de base TB, c'est-à-dire correspondant au coût de la communication entre deux impulsions de taxe successives dont la période de taxation dépend de la zone de rattachement de l'abonné demandé selon le plan de numérotation actuellement en vigueur; et

– lorsque la communication est taxée à la durée, un quatrième mot codé binaire indiquant le palier de taxe PT, c'est-à-dire la période de taxation entre deux impulsions de taxe.

On notera qu'on se réfère, en ce qui concerne les caractéristiques de la taxation, à des impulsions de taxe telles qu'émises selon l'art antérieur sur une ligne téléphonique à partir du central vers le poste d'abonné.

Comme déjà dit, le circuit de détection 1 comporte un détecteur de signaux de supervision 12. Il comporte éventuellement, d'une manière analogue à celle décrite par exemple dans le brevet français 2.270.738, des première et seconde bascules bistables dont les entrées sont respectivement connectées à des photo-coupleurs du coupleur 6. La sortie 120 de la première bascule passe de l'état «0» à l'état «1» lorsqu'il y a une première inversion de la polarité de la batterie du central après le décrochage de l'abonné demandé, initialisant le début de la conversation. La sortie 121 de la seconde bascule passe de l'état «0» à l'état «1» dès qu'une seconde polarité opposée à la précédente est présente après le raccrochage du combiné du poste 5. Les bascules du détecteur 12 seront mises en œuvre, de préférence, lorsque le central de rattachement 4 effectue une telle inversion de batterie, auquel cas le premier mot codé précité pourra ne pas être transmis par le central, puisque la détection de la première inversion de batterie est une indication analogue à celle du premier mot codé. Par ailleurs, le raccrochage peut être détecté par l'intermédiaire d'un interrupteur qui est fermé lorsque le combiné du poste est raccroché, d'une manière analogue aux crochets commutateurs du poste téléphonique 5.

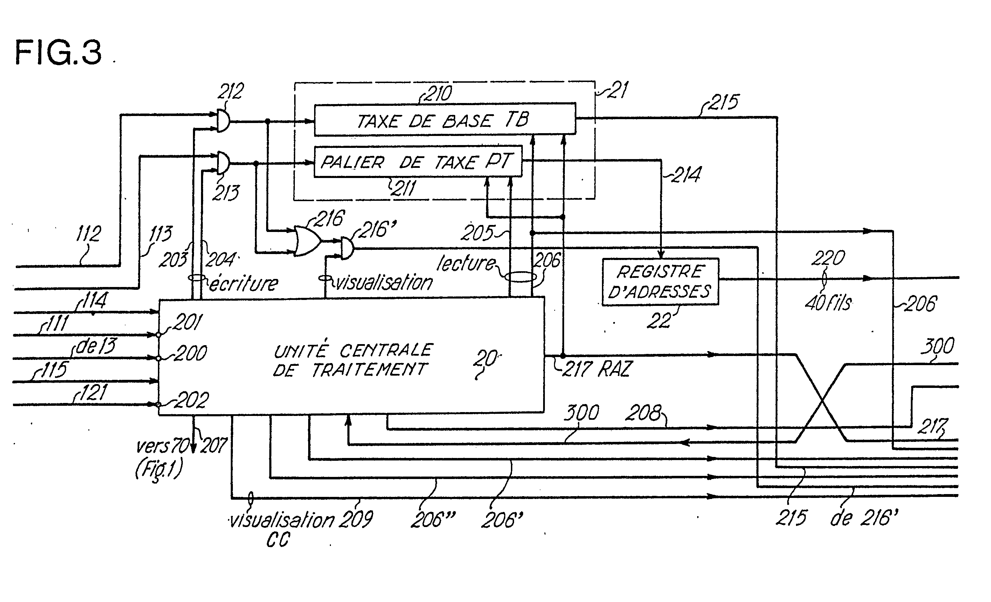

L'unité de commande 2 est détaillée à la Fig. 3. Elle comporte une unité centrale de traitement 20, du genre microprocesseur, qui interprète et exécute des instructions en fonction d'un programme préenregistré dans une mémoire morte interne qui est adressée par les signaux d'ordre transmis par le circuit de détection 2. L'unité centrale 20 reçoit par une première entrée 200, à travers une porte OU 13, un signal d'établissement de la conversation, lorsque le décodeur 11 a détecté et transmis sur sa sortie 110 ledit premier mot codé, ou lorsque le détecteur 12 a détecté ladite première inversion de batterie et met à l'état «1» le fil de sortie 120. Une seconde entrée 201 de l'unité 20 reçoit un second mot codé, c'est-à-dire le bit indiquant le type de taxation de la communication, lorsque le décodeur 11 a détecté et transmis sur sa sortie 111 ledit second mot codé. Enfin, l'unité 20 reçoit par une entrée 202, qui est reliée à la sortie 121 du détecteur de signaux de supervision 12, un signal «1» lorsque le détecteur 12 a détecté le raccrochage en fin de communication.

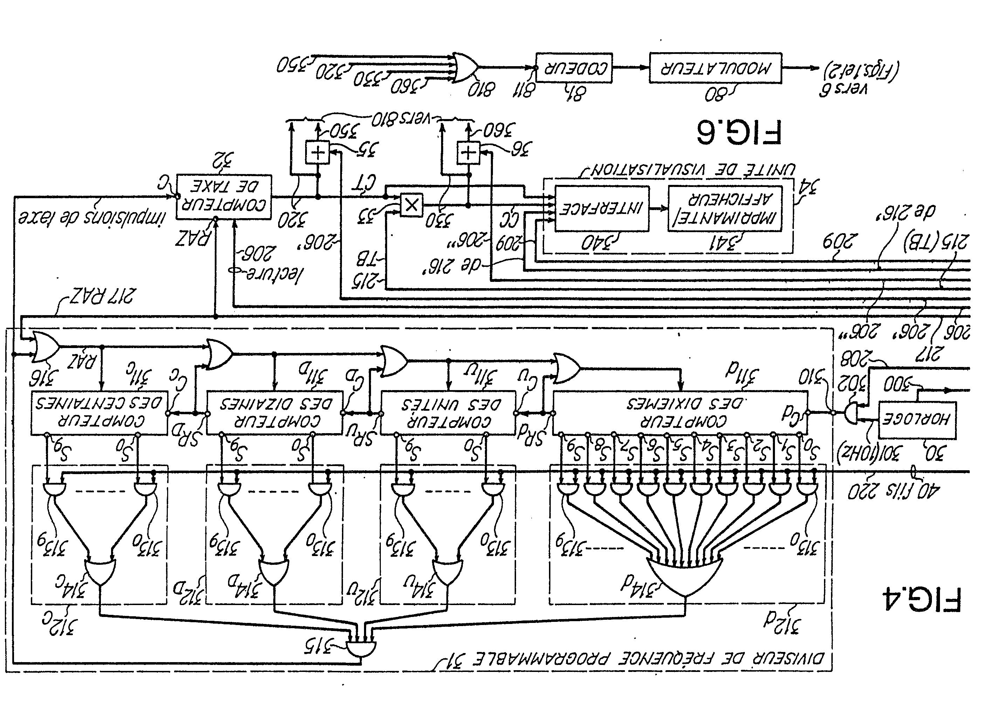

L'unité de commande 2 comporte également une mémoire vive 21 et un registre d'adresses 22. La mémoire vive 21 est composée de deux cellules 210 et 211. La cellule 210 mémorise ledit troisième mot codé indiquant le coût de la taxe de base TB sur ordre d'écriture transmis sur un fil 203 par l'unité de traitement 20 vers l'une des entrées d'une porte ET 212. Ledit quatrième mot codé indiquant le palier de taxe PT est mémorisé dans la seconde cellule 211 sur ordre d'écriture transmis sur un fil 204 par l'unité de traitement 20 vers l'une des entrées d'une seconde porte ET 213. Les autres entrées des portes ET 212 et 213 reçoivent les mots TB et PT à partir des sorties 112 et 113 du décodeur 11. Le registre d'adresses 22 reçoit, à travers le fil de sortie 214 de la cellule 211, le mot de palier de taxe PT lorsque cette cellule est adressée en lecture par l'unité de traitement 20 à travers un fil 205. Le bus de sortie 220 du registre 22 délivre, en réponse à chaque palier de taxe PT, une adresse de sortie d'un diviseur de fréquence programmable 31 du circuit de comptage et de visualisation 3, comme on le verra dans la suite en référence à la Fig. 4. Le mot de coût de la taxe de base TB est également lu dans la cellule 210, sur ordre de l'unité 20 délivré sur un fil 206, et est transmis sur le fil de sortie 215 de la cellule 210 vers une unité arithmétique 33 du circuit 3.

En se référant à la Fig. 4, le circuit de comptage et de visualisation 3 comprend essentiellement les circuits suivants. Une horloge 30 produit des impulsions ayant des fréquences déterminées. Le diviseur de fréquence programmable 31 élabore des impulsions de taxe dont la fréquence est égale à l'inverse du palier de taxe PT et dépend, par conséquent, du type de la communication demandée, c'est-à-dire du préfixe ou des préfixes nationaux et internationaux du numéro d'appel de l'abonné demandé. Un compteur de taxe 32 compte les impulsions de taxe pendant la durée de conversation entre la fin de la phase de numérotation et le raccrochage. L'unité arithmétique 33 établit le coût de la communication et une unité de visualisation 34 visualise des données de taxation telles que le coût de la communication CC.

L'horloge 30 comprend un oscillateur à quartz de grande stabilité à la sortie duquel est reliée une série de diviseurs de fréquence convenable afin de produire une fréquence de référence transmise sur un fil 300 pour caler la base de temps incluse dans l'unité de traitement 20, et une fréquence d'horloge transmise sur un fil 301, à travers une porte ET 302, vers l'entrée de comptage 310 du diviseur programmable 31. La fréquence d'horloge est égale au plus grand commun diviseur des fréquences des impulsions de taxe. Cette fréquence d'horloge est égale à 10 Hz, puisque les périodes de taxe de base pour des communications internationales, entre autres, sont définies actuellement à 0,1 s près.

Cette horloge 30 ainsi que tous les circuits de l'appareil enregistreur sont alimentés par une alimentation en tension locale 7, montrée à la Fig. 1, qui comprend une batterie de piles ou un redresseur et un transformateur relié au secteur dans le local de l'abonné. L'alimentation 7 est reliée de manière connue à l'appareil à travers un interrupteur 70 dont la fermeture est, par exemple, commandée par un relais ou un photocoupleur convenablement inséré dans le circuit audio du poste téléphonique, lorsque le combiné du poste est décroché, et dont l'ouverture est commandée après une durée prédéterminée succédant au raccrochage par instruction de l'unité de traitement 20 à travers un fil 207.

Le diviseur de fréquence programmable 31 est composé de quatre compteurs décimaux $311_d$, $311_U$, $311_D$ et $311_C$, qui sont à module fixe, c'est-à-dire à compte maximal limité à dix, et de quatre circuits d'accès aux sorties des compteurs $312_d$, $312_U$, $312_D$ et $312_C$. Les quatre compteurs se remettent chacun automatiquement à zéro lorsque leur compte est égal à dix et permettent de compter jusqu'à 9999 impulsions d'horloge, à la fréquence de 10 Hz. Ils sont capables de produire des impulsions de taxe comprises entre la plus petite période de taxe actuellement en vigueur, qui est égale à 1,3 s pour une communication par exemple entre la France et le Japon, et la plus grande période de taxe qui est égale à 240 s pour une communication par exemple établie la nuit entre un abonné demandeur de la circonscription de Paris et un abonné demandé de la première zone périphérique parisienne.

Chaque compteur 311 a dix sorties $S_0$ à $S_9$. Chaque sortie $S_i$, i variant de 0 à 9, met à l'état «1» l'une des entrées d'une porte ET $313_i$ parmi dix, $313_0$ à $313_9$, qui est contenue dans le circuit d'accès associé 312, dès que le compte du compteur est égal à l'entier i et jusqu'à la prochaine remise à zéro du compteur. L'entrée de comptage $C_d$ du compteur $311_d$, qui est affecté aux dixièmes de seconde, est reliée à la sortie 301 de l'horloge 30, à travers la porte ET 302. L'autre entrée de la porte ET 302 est reliée par le fil 208 à l'unité de traitement 20 qui l'ouvre dès que l'unité 20 reçoit sur son entrée 201 le bit «1» du second mot codé indiquant que la communication est taxée à la durée et jusqu'à la détection du raccrochage sur son entrée 202. L'entrée de comptage $C_U$, $C_D$, $C_C$ de chacun des trois autres compteurs $311_U$, $311_D$, $311_C$, qui sont affectés respectivement aux unités, dizaines et centaines de seconde, est reliée à la sortie de report $SR_d$, $SR_U$, $SR_C$ du compteur précédent $311_d$, $311_U$, $311_D$. Chaque sortie de report SR d'un compteur émet une impulsion lorsque le compte du compteur est égal à dix. Les autres entrées des portes ET 313 des circuits d'accès 312 reçoivent sélectivement des signaux de commande d'ouverture par le bus de sortie 220 à 40 fils du registre d'adresses 22. Les sorties des dix portes ET $313_0$ à $313_9$ de chaque circuit d'accès $312_d$, $312_U$, $312_D$, $312_C$ sont reliées à l'une des quatre entrès d'une porte ET 315 à travers une porte OU $314_d$, $314_U$, $314_D$, $314_C$. La sortie de la porte ET 315 est reliée à l'entrée de comptage C du compteur de taxe 32 et, à travers une porte OU 316, aux entrées de remises à zéro RAZ des quatre compteurs $311_d$, $311_U$, $311_D$ et $311_C$. La sortie de la porte 315 transmet les impulsions de taxe à la fréquence sélectionnée (1/PT) par le registre 22 chaque fois que les sorties des quatre portes OU 314 sont à l'état «1». Par exemple, lorsque le palier de taxe PT lu dans la cellule de mémoire 211 est égal à 9,5 s, le registre d'adresses sélectionne, à travers le bus 220, les sorties $S_5$, $S_9$, $S_0$ et $S_0$ des compteurs $311_d$, $311_U$, $311_D$ et $311_C$ en mettant à l'état «1» les entrées des portes ET correspon-

dantes $313_5$, $313_9$, $313_0$ et $313_0$ respectivement dans les circuits d'accès $312_d$, $312_U$, $312_D$ et $312_C$. Les compteurs 311 sont remis à zéro simultanément toutes les 9,5 s, s'est-à-dire à chaque émission d'une impulsion de taxe à la période de 9,5 s transmise de la sortie de la porte ET 315 vers l'entrée de comptage C du compteur de taxe 32.

Le compteur de taxe 32 compte les impulsions de taxe pendant toute la durée de conversation, c'est-à-dire lorsque la porte ET 302 est ouverte. A la fin de la communication, correspondant à la détection du raccrochage sur le fil 121 par l'unité de traitement 20 et à la fermeture de la porte ET 302, le compte de taxe CT dans le compteur 32 et le coût de la taxe de base TB mémorisé dans la cellule 210 sont lus et transmis à travers les fils 320 et 215 vers les deux entrées de l'unité arithmétique 33 sur ordre de lecture transmis sur le fil 206 par l'unité 20. L'unité 33 est un multiplieur logique et transmet sur sa sortie 330 un mot codé CC qui indique le coût de la communication, tel que $CC = TB \times CT$, vers l'interface 340 de l'unité de visualisation des données de taxation 34. L'unité 34 comporte, par exemple, une imprimante et/ou un dispositif d'affichage à diodes électroluminescentes ou à cristaux liquides illustré en 341 sur la Fig. 4.

L'unité de visualisation 34 est d'un type connu et reçoit de l'unité 20, à travers le bus de commande 209, toutes les instructions concernant une impression (avance pas à pas du support d'enregistrement, colonnes par colonnes, puis lignes par lignes) et/ou un affichage d'un nombre (commande des diodes électroluminescentes ou des barrettes de cristaux liquides affectées à chaque ligne) chaque fois qu'un nombre doit être imprimé ou affiché. Ce nombre peut être précédé par un caractère indiquant à l'abonné le type de données.

On notera qu'en général, outre la visualisation du coût de la communication CC, les données suivantes peuvent être également visualisées dans l'unité 34, selon le choix de l'exploitant par programmation de l'unité de traitement 20 qui, on le rappelle, est un microprocesseur:

— le coût de la taxe de base TB, quel que soit le type de communication, et le palier de taxe PT, lorsque la taxation est à la durée, transmis directement par les sorties 112 et 113 du décodeur 11 à travers les portes OU et ET 216, 216′ et simultanément aux écritures dans les cellules 210 et 211, après que l'unité 20 a détecté aux écritures dans les cellules 210 et 211, après que l'unité 20 a détecté le second mot codé indiquant le type de communication;

— le nombre d'impulsion de taxe CT transmis par la sortie 320 du compteur 32 sur ordre de lecture sur le fil 206 par l'unité 20; et

— le numéro de l'abonné demandé et l'heure d'établissement de la communication au moyen d'un circuit de traitement des impulsions de numérotation comprenant un détecteur des impulsions de numérotation et un circuit de validation des impulsions de numérotation, et au moyen d'un circuit d'horodatage (non représentés), tels que ceux décrits par exemple dans la demande de brevet français No 2.340.001 déjà citée.

On notera que, lorsque l'unité de traitement 20 a détecté un second mot codé indiquant que la communication est locale et n'est pas taxée à la durée et qu'aucun mot de palier de taxe PT ne sera transmis, l'unité centrale de traitement 20 commande directement la visualisation du coût de la taxe de base TB à travers les portes 212, 216 et 216′ et maintient fermée la porte ET 302, de sorte qu'aucun comptage n'est effectué pendant la durée de la communication. Par ailleurs, selon cette première variante, après une temporisation de quelques secondes succédant à la détection du raccrochage sur le fil 121 et permettant la visualisation au moins du coût de la communication CC, l'unité de traitement 20 transmet sur le fil 217 un ordre de réinitialisation (RAZ) qui commande le vidage des cellules 210 et 211, la remise à zéro des compteurs 311, à travers la porte OU 316, et la remise à zéro du compteur de taxe 32. Puis l'unité 20 transmet sur le fil 207 un ordre d'ouverture de l'interrupteur 70 afin que l'appareil enregistreur ne consomme pas d'énergie pendant une inutilisation du poste téléphonique.

On décrit maintenant, en se référant à la Fig. 5, les organes principaux d'un central téléphonique automatique du type spatial en ce qui concerne la transmission côté abonné. Ces organes sont représentés schématiquement sur la Fig. 5. On décrira, de manière générale, en premier lieu, uniquement les fonctions de ces organes participant à la taxation d'une communication de départ à partir d'un abonné dont le poste est associé à un appareil enregistreur de taxation de l'art antérieur et reçoit des impulsions de taxe en provenance de la ligne d'abonné.

La ligne d'abonné TR est reliée, à travers un joncteur d'entrée 40, au réseau de connexion 41 qui comprend les différents étages de sélection afin de connecter entre elles les lignes d'abonné locales et les artères de transmission avec d'autres centraux. Le réseau de connexion 41 échange des informations pour assurer ces différentes connexions et différents signaux de supervision avec un bloc de supervision du central. Ce bloc comprend, d'une manière connue, un ou plusieurs multienregistreurs et marqueurs affectés chacun à des lignes d'abonné prédéterminées, un traducteur et un taxeur. Pour une ligne d'abonné TR, le multienregistreur d'affectation 42 reçoit les impulsions de numérotation et établit tous les signaux de supervision, tels que tonalité et signalisation, nécessaires à l'établissement d'une communication. En particulier, le multienregistreur 42 transmet, au début d'une communication, vers le taxeur 43 le palier de taxe à imputer, et certaines discriminations telles que celles indiquant si l'abonné a droit à l'indication de taxe, c'est-à-dire si le poste d'abonné est associé à un appareil enregistreur de taxation et doit recevoir des impulsions de taxe. Le marqueur d'affectation 44 assure les liaisons entre le réseau de connexion d'une part et les multienregistreurs, le taxeur, le traducteur et l'organe de gestion du central d'autre part.

Le traducteur 45 associé au multienregistreur 42 joue le rôle de mémoire pour le multienregistreur et fournit en particulier à ce dernier, en fin de communication, la taxe de base à imputer pour la communication. Le taxeur 43 détermine, en fin de communication, le coût de la communication et le transmet à l'organe de gestion 46. D'autre part, le taxeur comprend une minuterie qui produit sur ses différentes sorties toutes les fréquences de taxe actuellement en vigueur qui sont sélectionnées par le taxeur en fonction de la communication établie. Les impulsions de taxe sont transmises à travers le joncteur 40 vers l'enregistreur de taxation de l'abonné.

Conformément à l'invention, il apparait que le taxeur 43, au lieu de commander la transmission des impulsions de taxe, émet, à travers le joncteur 40, au moyen d'un modulateur 47 conforme à l'avis précité V 21 du C.C.I.T.T., le message de taxation tel que défini ci-dessus.

D'autre part, selon une seconde variante, les impulsions de taxe non transmises vers le poste d'abonné, conformément à l'invention, n'ont plus besoin d'être comptées par le taxeur, si celui-ci peut avoir accès, en fin de communication, au compte de taxe CT ou, plus précisément, au coût de la communication CC établi par le multiplieur 33 de l'appareil enregistreur.

A cette fin, selon cette seconde variante, l'appareil enregistreur comprend un modulateur 80 et un codeur 81, comme montré à la Fig. 6. Le modulateur 80 et le démodulateur 10 (Fig. 2) forment un modem conforme à l'avis V 21 du C.C.I.T.T. Le modulateur 80 a sa sortie reliée à la ligne téléphonique TR à travers le coupleur 6. Lorsque le multienregistreur 42 a détecté le raccrochage de l'abonné, le taxeur 43 transmet un message dit de fin de communication sur la ligne téléphonique TR. Ce message, démodulé par le démodulateur 10 et décodé par le décodeur 11 de l'appareil enregistreur, indique à travers le fil 114 à l'unité centrale 20 (Figs. 2 et 3) que le coût CC et, éventuellement, le nombre de taxes CT doivent être transmis vers le central 4. Pour ce faire, l'ordre de lecture sur le fil 206 commande également, à travers une porte OU 810, la transmission du compte de taxe CT de la sortie 320 du compteur de taxe 32 vers l'entrée 811 du décodeur 81, puis celle du coût CC de la sortie 330 du multiplieur 33 vers l'entrée 811. Les mots CT et CC sont reçus par le taxeur 43 du central à travers le joncteur 40 et un démodulateur 48 conforme à l'avis V 21 du C.C.I.T.T. Ces informations seront transmises à l'organe de gestion 46 du central par le taxeur 43.

On notera, selon cette seconde variante, que, lorsque tous les postes d'abonnés desservis par le central 4 comportent chacun un appareil enregistreur à modem 10–80, le taxeur 43 ne transmet plus aucune impulsion de taxe et ne comporte plus de minuterie de taxation, le role de cette derniere étant remplacé par les diviseurs de fréquence programmables 31 des appareils enregistreurs.

Enfin, selon une troisieme variante, l'appareil enregistreur comprend des moyens pour additionner les coûts de communications CC pendant une durée déterminée et, éventuellement, les comptes de taxe CT pendant cette durée. Comme montré à la Fig. 4, le circuit de comptage et de visualisation 3 comporte deux accumulateurs 35 et 36. L'entrée de l'accumulateur 35 est reliée à la sortie 320 du compteur de taxe 32, et additionne successivement les comptes de taxe CT de communications successives. De même, l'entrée de l'accumulateur 36 est reliée à la sortie 330 du multiplieur 33 et additionne successivement les coûts des communications CC. Ainsi, les accumulateurs 35 et 36 ont des fonctions analogues aux accumulations effectuées dans l'organe de gestion 46 du central en vue d'établir, par périodes prédéterminées, par exemple tous les deux mois, la facturation des prestations téléphoniques relatives à l'abonné. Pour ce faire, sur ordre de l'organe de gestion 46, le taxeur 43 émet un message déterminé à travers le modulateur 47 et le joncteur 40 sur la ligne téléphonique TR. Ce dernier message démodulé par le démodulateur 10 et reconnu par le décodeur 11 indique, par le fil de sortie 115 du décodeur, à l'unité centrale de traitement 20 qu'elle doit ordonner:

– à travers le fil 206', la lecture du compte de taxe cumulé dans l'accumulateur 35 pour transmettre le compte de taxe cumulé de la sortie 350 de l'accumulateur 35 vers l'entrée 811 du codeur 81 à travers la porte OU 810 (Figs. 4 et 6); puis

– à travers le fil 206'', la lecture du coût de communication cumulé dans l'accumulateur 36 pour transmettre le coût cumulé de la sortie 360 de l'accumulateur 36 vers l'entrée 811 du codeur 81 à travers la porte OU 810.

Chacune des lectures précédentes est suivie d'une remise à zéro de la mémoire interne de l'accumulateur 35, 36. Ce message de compte et de coût cumulés est transmis par le modulateur 80 vers le central 4, dont l'organe de gestion 46 établira la facturation en fonction des données de cumulation précédentes.

On notera que, selon cette troisieme variante, il peut être prévu un clavier alphanumérique (non présenté) commandant l'unité centrale de traitement 20 afin que le support d'enregistrement de l'unité de visualisation 34 visualise sur ordre de l'abonné le compte cumulé et le versement à facturer à tout instant désiré au cours de la période prédéterminée. L'abonné pourra ainsi vérifier si des erreurs se sont introduites dans le bordereau de facturation édité par l'administration.

On notera également que, selon cette troisieme variante, l'appareil enregistreur ne comporte plus d'interrupteur d'alimentation, tel que 70 montré à la Fig. 1, afin que l'appareil soit alimenté en permanence afin de détecter, à n'importe quel instant, un message provenant du central de rattachement, comme il est d'usage pour les terminaux de données.

Par ailleurs, le central téléphonique de rattachement peut être du type spatial ou temporel sans pour cela que les fonctions inhérentes à la taxation selon l'invention ne puissent être réalisées en conformité à la description de la Fig. 5.

**Revendications**

1. Appareil enregistreur du coût d'une communication téléphonique, comprenant des moyens de couplage (6) à la ligne téléphonique (TR) d'un poste d'abonné (5) desservi par un central de rattachement (4), un compteur d'impulsions de taxe (32), des premiers moyens (210) pour mémoriser la taxe de base (TB) de ladite communication, des moyens (33) pour établir le coût de la communication (CC), des moyens (34) pour visualiser au moins la taxe de base (TB) de la communication avant l'établissement de la phase de conversation et le coût de la communication (CC), une horloge (30) fournissant des impulsions d'horloge, des moyens (12) pour détecter le raccrochage de l'abonné et des moyens de temporisation (20) commandés par lesdits moyens de détection de raccrochage (12) pour commander lesdits moyens de visualisation (34) après le raccrochage, caractérisé en ce qu'il comprend des moyens (10, 11) reliés aux moyens de couplage (6) pour détecter un message codé de données, telles que la période des impulsions de taxe (PT) afférente à ladite communication, qui est transmis par le central de rattachement (4) audit poste après la numérotation du numéro d'appel demandé, des seconds moyens (211) pour mémoriser la période des impulsions de taxe (PT) et des moyens (22, 31) connectés aux seconds moyens de mémorisation (211) et à ladite horloge (30) pour produire des impulsions de taxe à ladite période de taxe (PT) comptées par ledit compteur de taxe (32) en réponse au message détecté.

2. Appareil enregistreur conforme à la revendication 1, caractérisé en ce que lesdits moyens de production d'impulsions de taxe comprennent un diviseur de fréquence programmable (31) recevant les impulsions d'horloge (30) et des moyens (22) reliés auxdits seconds moyens de mémorisation (211) pour sélectionner des sorties du diviseur de fréquence programmable (31) en fonction de la période de taxe mémorisée (PT) afin que ledit diviseur compte périodiquement un nombre d'impulsions d'horloge égale au rapport de la période de taxe (PT) et de la période des impulsions d'horloge et transmette au compteur de taxe (32) des impulsions de taxe à ladite période de taxe (PT).

3. Appareil enregistreur conforme à la revendication 2, caractérisé en ce que la période d'horloge est égale au plus grand commun diviseur des périodes de taxe des communications téléphoniques.

4. Appareil enregistreur conforme à la revendication 2 ou 3, caractérisé en ce que le diviseur de fréquence programmable (31) comporte au moins quatre compteurs décimaux (311) connectés en série ayant chacun une sortie sélectionnée par lesdits moyens de sélection de sorties (22) afin que les sorties sélectionnées transmettent à travers une porte ET (315) des impulsions de taxe à ladite période de taxe (PT), chaque impulsion de taxe commandant la remise à zéro desdits compteurs (311).

5. Appareil enregistreur conforme à l'une des revendications 1 à 4, caractérisé en ce que ledit message de données de taxation comporte un mot indiquant si la communication n'est pas taxée à la durée (111), auquel cas ledit message ne comporte pas de mot indiquant la période de taxe (PT) et lesdits moyens de détection du message de taxation (10, 11) commandent l'inhibition du compteur de taxe (32).

6. Appareil enregistreur conforme à l'une des revendications 1 à 5, caractérisé en ce que le message codé de données comporte la taxe de base (TB) afférente à ladite communication qui est détectée par les moyens de détection (10, 11) en vue de son écriture dans les premiers moyens de mémorisation (210).

7. Appareil enregistreur conforme à la revendication 6, caractérisé en ce que les moyens de détection de message (10, 11) commandent les moyens de visualisation (34) pour visualiser la taxe de base (TB) dès détection de celle-ci, puis, lorsque la communication est taxée à la durée, la période de taxe (PT) dès la détection de celle-ci.

8. Appareil enregistreur conforme à la revendication 6 ou 7, caractérisé en ce que les moyens d'établissement du coût de la communication comprennent un multiplieur logique (33) qui multiplie le compte de taxe (CT) par la taxe de base (TB).

9. Appareil enregistreur conforme à l'une des revendications 6 à 8, caractérisé en ce que le message de données comporte un premier mot (110), qui est transmis par ledit central de rattachement (4) après réception du signal d'accusé de réception de l'abonné demandé et est détecté par lesdits moyens de détection de message (10, 11), pour initialiser le compteur d'impulsions de taxe (32) avant la durée de conversation, et en ce que les moyens de détection de raccrochage (12) détectent un message de données (121) indiquant la fin de communication, qui est transmis par ledit central de rattachement (4) après raccrochage de l'abonné demandeur, pour commander les transferts du compte (CT) du compteur de taxe (32) et de la taxe de base (TB) des premiers moyens de mémorisation (210) dans lesdits moyens d'établissement du coût (33) et pour commander lesdits moyens de visualisation (34) en vue de la visualisation du coût de la communication (CC).

10. Appareil enregistreur conforme à l'une des revendications 6 à 9, caractérisé en ce qu'il comprend des moyens (6, 12) couplés à ladite ligne téléphonique (TR) pour détecter une première inversion de polarité de la batterie dudit central (4) après réception du signal d'accusé de réception de l'abonné demandé par le central afin d'initialiser le compteur d'impulsions de taxe (32) avant la durée de conversation et pour détecter une seconde inversion de polarité de la batterie du central après raccrochage de l'abonné demandeur, afin de commander les transferts de compte (CT) du compteur de taxe (32) et de la taxe de base (TB) des premiers moyens de mémorisation (210) dans

15 **0 023 181** 16

lesdits moyens d'établissement du coût (33) et pour commander les moyens de visualisation (34) en vue de la visualisation du coût de la communication (CC).

11. Appareil enregistreur conforme à l'une des revendications 1 à 10, caractérisé en ce qu'il comprend des moyens (80, 81) reliés au compteur d'impulsions de taxe (32) et/ou aux moyens d'établissement du coût de la communication (33) et couplés à ladite ligne téléphonique (TR), pour transmettre à travers les moyens de couplage (6) vers ledit central de rattachement (4), après raccrochage, un message de données codé indiquant le compte de taxe (CT) et/ou le coût de la communication (CC) après raccrochage de l'abonné demandeur.

12. Appareil enregistreur conforme à la revendication 11, commprenant des moyens (35) connectés au compteur de taxe (32) pour cumuler les comptes de taxe de communications établies pendant une durée prédéterminée et/ou des moyens (36) connectés auxdits moyens d'établissement du coût de la communication (33) pour cumuler les coûts desdites communications, caractérisé en ce que les moyens de détection de message (10, 11) détectent un message prédéterminé (115) transmis par ledit central de rattachement (4) à la fin de ladite durée prédéterminée pour commander lesdits moyens de cumulation de comptes de taxe (35) et/ou lesdits moyens de cumulation des coûts (36) afin que ces derniers transmettent à travers lesdits moyens de transmission de message (80, 81) vers le central (4) un message codé indiquant le compte de taxe cumulé et/ou le coût cumulé pendant ladite durée prédéterminée.

13. Appareil enregistreur conforme à l'une des revendications 1 à 11, caractérisé en ce qu'il comprend des moyens de temporisation (207, 70) pour mettre hors tension ledit appareil après la visualisation du coût de la communication.

14. Appareil enregistreur conforme à l'une des revendications 1 à 13, caractérisé en ce que les moyens de détection (10, 11) et de transmission (80, 81) de message comprennent respectivement un modulateur et un démodulateur du genre à modulation série bivalente obtenue par déplacement de fréquence.

15. Central téléphonique associé pour desservir un appareil enregistreur conforme à l'une des revendications 1 à 10, 13 et 14, caractérisé en ce qu'il comprend des moyens (47) interconnectés entre le joncteur (40) de la ligne d'abonné (TR) et le taxeur (43) dudit central (4) pour coder et transmettre vers ledit appareil des messages codés de données conformes à la revendication 1 et/ou 9 sur ordre dudit taxeur (43).

16. Central téléphonique conforme à la revendication 15 et mettant en œuvre un appareil enregistreur conforme à l'une des revendications 11 à 14, caractérisé en ce qu'il comprend des moyens (48) interconnectés entre le joncteur (40) de la ligne d'abonné (TR) et le taxeur du central (43) pour recevoir dudit appareil enregistreur et décoder des messages codés de données conformes à la revendication 11 et/ou 12 en vue de les enregistrer dans ledit taxeur (43).

17. Central téléphonique conforme à la revendication 15 ou 16, caractérisé en ce que les moyens de transmission et de codage (47) et les moyens de réception et de décodage (48) de messages comprennent un modulateur et un démodulateur du type de ceux décrits dans la revendication 14.

**Patentansprüche**

1. Registriergerät für die Kosten einer Telefonverbindung, mit einer Einrichtung (6) zum Ankoppeln an die Telefonleitung (TR) einer von einer Vermittlungszentrale (4) versorgten Teilnehmerstation (5), mit einem Gebührenimpulszähler (32), mit einer ersten Einrichtung (210) zum Speichern der Gebühreneinheit (TB) der Verbindung, mit einer Einrichtung (33) zur Erstellung der Verbindungskosten (CC), mit einer Einrichtung (34) zur Anzeige mindestens der Gebühreneinheit (TB) der Verbindung vor der Herstellung der Sprechverbindung und zur Anzeige der Verbindungskosten (CC), mit einem Taktgeber (30) zur Lieferung von Taktimpulsen, mit einer Einrichtung (12) zum Feststellen des Auflegens der Teilnehmer, und mit einer Einrichtung (20) zur Zeitgabe, die durch die Feststellungseinrichtung (12) gesteuert ist, um ihrerseits die Anzeigeeinrichtung (34) nach dem Auflegen zu steuern, dadurch gekennzeichnet, dass es eine mit der Ankopplungseinrichtung (6) verbundene Einrichtung (10) zur Ermittlung einer verschlüsselten Botschaft von Daten, wie zum Beispiel der einer Verbindung zugeordneten Gebührenimpulsperiode (PT), die von der Vermittlungszentrale (4) der Station nach dem Wählen der gewünschten Teilnehmernummer übermittelt wird, eine zweite Einrichtung (211) zum Speichern der Gebührenimpulsperiode (PT) und mit der zweiten Speichereinrichtung (211) und dem Zeitgeber (30) verbundene Einrichtungen (22, 31) zum Erzeugen der Gebührenimpulse der Gebührenimpulsperiode (PT), die von dem Gebührenzähler (32) als Antwort auf die ermittelte Botschaft gezählt werden, aufweist.

2. Registriergerät nach Anspruch 1, dadurch gekennzeichnet, dass die Einrichtung zur Erzeugung der Gebührenimpulse einen programmierbaren Frequenzteiler (31) aufweist, der die Impulse des Taktgebers (30) empfängt, und eine mit der zweiten Speichereinrichtung (211) verbundene Einrichtung (22) zum Auswählen der Ausgänge des programmierbaren Frequenzteilers (31) in Abhängigkeit von der gespeicherten Gebührenimpulsperiode (PT) aufweist, damit der Frequenzteiler periodisch eine Zahl der Taktgeberimpulse zählt, die gleich dem Verhältnis der Gebührenimpulsperiode (PT) und der Taktgeberimpulsperiode ist, und der zu dieser Gebührenimpulsperiode (PT) Gebührenimpulse auf den Gebührenzähler (32) überträgt.

3. Registriergerät nach Anspruch 2, dadurch gekennzeichnet, dass die Taktgeberperiode gleich dem grössten gemeinsamen Teiler der Gebührenimpulsperioden der Telefonverbindungen ist.

4. Registriergerät nach Anspruch 2 oder 3, dadurch gekennzeichnet, dass der programmierbare Frequenzteiler (31) mindestens vier Dezimalzähler (311) aufweist, die in Reihe geschaltet sind und von denen jeder einen durch die Einrichtung (22) zur Auswahl der Ausgänge auswählbaren Ausgang aufweist, wobei die ausgewählten Ausgänge über ein UND-Tor (315) Gebührenimpulse zu der Gebührenimpulsperiode (PT) übertragen und jeder Gebührenimpuls die Rückstellung der Zähler (311) auf Null steuert.

5. Registriergerät nach einem der Ansprüche 1 bis 4, dadurch gekennzeichnet, dass die Datenbotschaft ein Wort enthält, das angibt, wenn die Verbindung nicht nach der Dauer (111) berechnet wird, in welchem Falle die Botschaft kein Wort enthält, das die Gebührenimpulsperiode (PT) angibt, und die Einrichtungen (10, 11) zur Feststellung der Gebührenbotschaft die Sperrung des Gebührenzählers (32) steuern.

6. Registriergerät nach einem der Ansprüche 1 bis 5, dadurch gekennzeichnet, dass die verschlüsselte Datenbotschaft die einer Verbindung zugeordnete Gebühreneinheit (TB) umfasst, die von den Einrichtungen (10, 11) zur Feststellung der Gebührenbotschaft zwecks Einschreibens in die erste Speichereinrichtung (210) ermittelt wird.

7. Registriergerät nach Anspruch 6, dadurch gekennzeichnet, dass die Einrichtungen (10, 11) zum Feststellen der Datenbotschaft die Anzeigeeinrichtung (34) so steuern, dass die Anzeigeeinrichtung (34) die Gebühreneinheit (TB) nach ihrer Ermittlung und – sofern die Verbindung nach der Dauer berechnet wird – die Gebührenimpulsperiode (PT) sofort nach deren Feststellung anzeigt.

8. Registriergerät nach Anspruch 6 oder 7, dadurch gekennzeichnet, dass die Einrichtung zur Erstellung der Verbindungskosten eine logische Multiplizierstufe (33) umfasst, welche die Zahl der Gebührenimpulse (CT) mit der Gebühreneinheit (TB) multipliziert.

9. Registriergerät nach einem der Ansprüche 6 bis 8, dadurch gekennzeichnet, dass die Datenbotschaft ein erstes Wort (110) umfasst, das über die Vermittlungszentrale (4) nach dem Erhalt des Quittungszeichens des angerufenen Teilnehmers übertragen wird, und das durch die Einrichtungen (10, 11) zur Feststellung der Datenbotschaft festgestellt wird, um den Gebührenimpulszähler (32) vor dem Beginn des Gesprächszeitraumes auszulösen, und dass die Einrichtung (12) zur Feststellung des Auflegens eine Datenschaft (121) feststellt, welche das Ende der Verbindung anzeigt und die von der Vermittlungszentrale (4) nach dem Auflegen des anrufenden Teilnehmers übertragen wird, um die Übertragung der Gebührenzahl (CT) des Gebührenzählers (32) und der Gebühreneinheit (TB) aus der ersten Speichereinrichtung (211) in die Einrichtung (33) zur Kostenerstellung zu steuern und um die Anzeigeeinrichtung (34) zwecks Anzeige der Verbindungskosten (CC) zu steuern.

10. Registriergerät nach einem der Ansprüche 6 bis 9, dadurch gekennzeichnet, dass es mit der Telefonleitung (TR) gekoppelte Einrichtungen (6, 12) zur Feststellung einer ersten Polaritätsumkehr der Batterie der Vermittlungszentrale (4) nach dem Empfang des die Quittungszeichen des angerufenen Teilnehmers durch die Zentrale aufweist, um den Gebührenimpulszähler (32) auszulösen, bevor der Gesprächszeitraum beginnt, und um eine zweite Polaritätsumkehr der Batterie der Vermittlungszentrale nach dem Auflegen durch den anrufenden Teilnehmer festzustellen, um die Übertragung der Gebührenzahlen (CT) des Gebührenzählers 32) und der Gebühreneinheit (TB) der ersten Speichereinrichtung (210) in die Einrichtung (33) zur Erstellung der Verbindungskosten zu steuern und um die Anzeigeeinrichtung (34) zwecks Anzeige der Verbindungskosten (CC) zu steuern.

11. Registriergerät nach einem der Ansprüche 1 bis 10, dadurch gekennzeichnet, dass es Einrichtungen (80, 81) aufweist, die mit dem Gebührenzähler (32) und/oder der Einrichtung (33) zur Erstellung der Verbindungskosten verbunden und mit der Telefonleitung (TR) gekoppelt sind, um nach dem Auflegen über die Kopplungseinrichtung (6) in Richtung auf die Vermittlungszentrale (4) eine verschlüsselte Datenbotschaft zu übertragen, welche die Gebührenzahl (CT) und/oder die Verbindungskosten (CC) nach dem Auflegen des anrufenden Teilnehmers betreffen.

12. Registriergerät nach Anspruch 11, das eine mit dem Gebührenzähler (32) verbundene Einrichtung (35) zum Kumulieren der Gebührenzahlen der während einer vorgegebenen Zeitdauer anfallenden Telefonverbindungen und/oder eine mit der Einrichtung (33) zum Erstellen der Verbindungskosten verbundene Einrichtung (36) zum Kumulieren der Kosten dieser Verbindungen aufweist, dadurch gekennzeichnet, dass die Einrichtungen (10, 11) zur Feststellung der Datenbotschaft eine vorgegebene Botschaft (115) feststellen können, die von der Vermittlungszentrale (4) am Ende der vorgegebenen Zeitdauer übertragen wird, um die Einrichtung (35) zum Kumulieren der Gebührenzähler und/oder die Einrichtung (36) zum Kumulieren der Verbindungskosten zu steuern, damit letztere über die Einrichtungen (80, 81) zur Übertragung der Botschaft auf die Vermittlungszentrale (4) eine verschlüsselte Botschaft übertragen, welche die Gesamtgebührenzahl und/oder die Gesamtverbindungskosten, die während der vorgegebenen Zeitdauer angefallen sind, bezeichnet.

13. Registriergerät nach einem der Ansprüche 1 bis 11, dadurch gekennzeichnet, dass es eine Zeitgabeeinrichtung (207, 70) aufweist, mit deren Hilfe das Gerät nach der Anzeige der Verbindungskosten spannungsfrei gestellt wird.

14. Registriergerät nach einem der Ansprüche 1 bis 13, dadurch gekennzeichnet, dass die Einrichtungen (10, 11) zur Feststellung und die Einrichtungen (80, 81) zur Übertragung der Botschaft jeweils einen Modulator und einen Demodulator für eine bivalente Serienmodulation, die durch Frequenzverschiebung erhalten wird, aufweisen.

15. Vermittlungszentrale in Verbindung mit einem Registriergerät nach einem der Ansprüche 1 bis 10, 13 und 14, dadurch gekennzeichnet, dass sie eine zwischen die Verbindungsstufe (40) der Teilnehmerleitung (TR) und die Gebühreneinrichtung (43) der Vermittlungszentrale (4) gelegte Einrichtung (47) zum Codieren und Übertragen verschlüsselter Datenbotschaften nach einem der Ansprüche 1 und/oder 9 auf Befehl der Gebühreneinrichtung (43) aufweist.

16. Vermittlungszentrale nach Anspruch 15 zur Ausführung eines Registriergeräts nach einem der Ansprüche 1 bis 14, dadurch gekennzeichnet, dass sie eine zwischen die Verbindungsstufe (40) der Teilnehmerleitung (TR) und die Gebühreneinrichtung (43) der Vermittlungszentrale (4) geschaltete Einrichtung (48) aufweist, mit welcher vom Registriergerät verschlüsselte Datenbotschaften gemäss den Ansprüchen 11 und/oder 12 empfangen und decodiert werden, um sie in der Gebühreneinrichtung (43) zu registrieren.

17. Vermittlungszentrale nach Anspruch 15 oder 16, dadurch gekennzeichnet, dass die Einrichtung (47) zur Übertragung und Codierung und die Einrichtung (48) zum Empfang und zum Decodieren der Botschaften einen Modulator und einen Demodulator der im Anspruch 14 beschriebenen Art aufweisen.

## Claims

1. Apparatus for recording the cost of a telephone call, comprising coupling means (6) to the telephone line (TR) of a subscriber's set served from an associated exchange (4), a counter of charge pulses (32) first means (210) for storing the charge unit (TB) of said call, means (33) for establishing the cost of the call (CC), means (34) for displaying at least the charge unit (TB) of the call before establishing the conversation phase, and the cost of the call (CC), a clock (30) producing clock pulses, means (12) for sensing the replacing by the subscriber and delaying means (20) controlled·by said replacing sensing means (12) for controlling said displaying means (34) after the replacing, characterized in that it comprises means (10, 11) connected to the coupling means (6) for detecting a coded data message such as the period of the charge pulses (PT) assigned to said call, that is transmitted from the associated exchange (4) to said set after the dialing of the called number, second·means (211) for storing the period of charge pulses (PT) and means (22, 31) connected to said second storing means (211) and said clock (30) for producing charge pulses having said charge period and counted by said charge counter (32) in response to the detected message.

2. Recording apparatus as claimed in claim 1, characterized in that said charge pulse producing means comprise a programmable frequency divider (31) receiving the pulses of the clock (30) and means (22) connected to said second storing means (211) for selecting outputs of the programmable frequency divider (31) as a function of the stored charge period (PT) whereby said divider counts periodically a number of clock pulses equal to ratio of the charge period (PT) and the period of the clock pulses and delivers charge pulses having said charge period (PT) to the charge counter (32).

3. ·ording apparatus as claimed in claim 2, cha. ized in that the clock period is equal to the ۱ ,nest common factor of the charge periods of the telephone calls.

4. Recording apparatus as claimed in claim 2 or 3, characterized in that the programmable frequency divider (31) comprises at least four series – connected decimal counters (311), each having an output selected by said output selecting means (22) whereby the selected outputs deliver charge pulses having said charge period (PT) through an AND gate (315), each charge pulse controlling the zero resetting of said counters (311).

5. Recording apparatus as claimed in any of claims 1 to 4, characterized in that said charging data message includes a word indicating that the call is not charged in dependance on the duration (111), in that case, said message including no word indicating the charge period (PT) and said charging message detecting means (10, 11) controlling the inhibition of the charge counter (32).

6. Recording apparatus as claimed in any one of claims 1 to 5, characterized in that the coded data message includes the charge unit (TB) assigned to said call that is detected by said detecting means (10, 11) so as to write it in said first storing means (210).

7. Recording apparatus as claimed in claim 6, characterized in that the message detecting means (10, 11) control the displaying means (34) to display the charge unit (TB) when detecting thereof, then if the call is charged in dependance on the duration, the charge period (PT) when detecting thereof.

8. Recording apparatus as claimed in claim 6 or 7, characterized in that the call cost establishing means comprise a logic multiplier (33) which multiplies the charge count (CT) by the charge unit (TB).

9. Recording apparatus as claimed in any one of claims 6 to 8, characterized in that the data message includes a first word (110) which is transmitted by said associated exchange (4) as a result of the reception of the acknowledgement signal by the called subscriber and which is detected by said message detecting means (10, 11) for triggering the charged pulse counter (32) before the conversation duration, and in that the replacing sensing means (12) sense a data message (121) indicating the call end which is transmitted by said associated exchange (4) after calling subscriber's replacing, for controlling the transfers of the count (CT) of the charge counter (32) and of the charge unit (TB) of said storing means (210) into said cost establishing means (33) and for controlling said displaying means (34) to display the call cost (CC).

10. Recording apparatus as claimed in any one of claims 6 to 9, characterized in that it comprises means (6, 12) coupled to said telephone line (TR) for sensing a first polarity reversal from the battery of the exchange after the central has received the called subscriber's acknowledgement signal, so as to trigger the charge pulse counter (32) before the conversation duration, and for sensing a second polarity reversal from the battery of the exchange after the calling subscriber's re.. .. j. so as to control the transfers of the cou.. of the charge counter (32) and of the charge u.. T3) of said first storing means (210) into said cost establishing means (33) and so as to control the displaying means (34) to display the call cost (CC).

11. Recording apparatus as claimed in any one of claims 1 to 10, characterized in that it comprises means (80, 81) connected to the charge pulse counter (32) and/or the call cost establishing means (33) and coupled to said telephone line (TR) for transmitting after replacing a coded data message which indicates the charge count (CT) and/or the call cost (CC) after the calling subscriber's replacing, to said associated exchange (4) through the coupling means (6).

12. Recording apparatus as claimed in claim 11 comprising means (35) connected to the charge counter (32) for cumulating the charge counts of calls established during a predetermined period of time und/or means (36) connected to said call cost establishing means (33) for cumulating the costs of said calls, characterized in that the message detecting means (10, 11) detect a predetermined message (115) transmitted from said associated exchange (4) at the end of said predetermined period of time to control said charge count cumulating means (35) and/or said cost cumulating means (36) whereby these last means transmit a coded message which indicates the cumulated charge count and/or the cumulated cost during said predetermined period of time, to the exchange (4) through said message transmitting means (80, 81).

13. Recording apparatus as claimed in any one of claims 1 to 11, characterized in that it comprises delaying means (207, 70) for switching off said apparatus after displaying the call cost.

14. Recording apparatus as claimed in any one of claims 1 to 13, characterized in that the message detecting means (10, 11) and the message transmitting means (80, 81) comprise a modulator and a demodulator of type with bivalent series modulation obtained by frequency deviation respectively.

15. Associated telephone exchange for serving a recording apparatus as claimed in any one of claims 1 to 10, 13 and 14, characterized in that it comprises means (47) interconnected between the trunk (40) of the subscriber line (TR) and the charging means (43) of said exchange for encoding and transmitting to said apparatus, coded data messages as claimed in claim 1 and/or 9 under the control of said charging means (43).

16. Telephone exchange as claimed in claim 15 for carrying out a recording apparatus as claimed in any one of claims 11 to 14, characterized in that it comprises means (48) interconnected between the trunk (40) of the subscriber line (TR) and the charging means (43) of the exchange for receiving from said recording apparatus and decoding coded data messages as claimed in claim 11 and/or 12 to record them in said charging means (43).

17. Telephone exchange as claimed in claim 15 or 16, characterized in that the message encoding and transmitting means (47) and the message decoding and receiving means (48) comprise a modulator and a demodulator as defined in claim 14.

# FIG.1

CENTRAL 4

ligne
téléphonique

APPAREIL ENREGISTREUR

6 ~ COUPLEUR

taxation

supervision

CCT DE DÉTECTION
DE SIGNAUX
DE SUPERVISION
ET DES DONNÉES
DE TAXATION

1(Fig.2)

5 ~ POSTE
TÉLÉPHONIQUE

raccrochage

décrochage

207

UNITÉ
DE COMMANDE

2(Fig.3)

ALIMENTATION

70

CCT
DE COMPTAGE
ET DE
VISUALISATION

3(Fig.4)

# FIG.5

T

40

JONCTEUR

R

41

RÉSEAU
DE CONNEXION

4

MARQUEUR

MULTIENREGISTREUR

44

42

TRADUCTEUR

45

TAXEUR

43

47

MODULATEUR

DÉMODULATEUR

48

46

ORGANE
DE GESTION

# FIG.2

CENTRAL 4

ligne téléphonique

T  R

6 — COUPLEUR

10 — DÉMODULATEUR

11 — DÉCODEUR

112
113
114  fin de communication
111  type de taxation
115

TB et PT

110

13

12 — DÉTECTEUR DE SIGNAUX DE SUPERVISION

120  début de conversation

121  raccrochage

200

5 — POSTE TÉLÉPHONIQUE

crochets commutateurs

ordre de transmission des compte et coût accumulés

FIG.3

0 023 181

# FIG.4

DIVISEUR DE FRÉQUENCE PROGRAMMABLE 31

COMPTEUR DES CENTAINES
COMPTEUR DES DIZAINES
COMPTEUR DES UNITÉS
COMPTEUR DES DIXIEMES

COMPTEUR DE TAXE 32

UNITÉ DE VISUALISATION

INTERFACE

IMPRIMANTE/AFFICHEUR

HORLOGE

40 fils 220

30(10Hz)

impulsions de taxe

# FIG.6

CODEUR

MODULATEUR

vers 6 (Figs.1 et 2)